# EUROPEAN PATENT APPLICATION

(11) **EP 4 648 442 A1**
(43) Date of publication of application: **12.11.2025**
(21) Application number: 23914525.3
(22) Date of filing: 22.12.2023
(51) Int. Cl.: H04W 4/02, B60R 16/037

(54) **POSITIONING METHOD, APPARATUS AND SYSTEM, ELECTRONIC DEVICE, AND STORAGE MEDIUM**

(30) Priority: 06.01.2023 CN 202310020790
(71) Applicant: Telink Semiconductor (Shanghai) Co., LTD., Shanghai 200135 (CN)
(72) Inventor: JIN, Haipeng, Shanghai 200135 (CN); LIANG, Lijing, Shanghai 200135 (CN); JIA, Kai, Shanghai 200135 (CN)
(74) Representative: v. Bezold & Partner Patentanwälte - PartG mbB
(86) International application number: PCT/CN2023/141037
(87) International publication number: WO 2024/146392

(57) **Abstract**

The present invention provides a positioning method, apparatus and system, an electronic device, and a storage medium. The method comprises: in response to a Bluetooth connection operation between a user terminal and a master Bluetooth device, sending to a plurality of slave Bluetooth devices data transmission information corresponding to the Bluetooth connection operation, wherein each slave Bluetooth device monitors Bluetooth communication between the user terminal and the master Bluetooth device under the instruction of the data transmission information; receiving monitoring data respectively returned by the plurality of slave Bluetooth devices; and determining position information of the user terminal relative to a vehicle on the basis of the monitoring data respectively returned by the plurality of slave Bluetooth devices. According to the present invention, a master Bluetooth device and a plurality of slave Bluetooth devices arranged on a vehicle are used in combination for positioning, the plurality of slave Bluetooth devices are respectively arranged at different positions on a vehicle body, and data that can be monitored by the slave Bluetooth devices at different positions is also different, so that multi-directional positioning can be carried out, and the positioning precision is relatively high.

## Description

This application claims priority to Chinese Patent Application No. CN 202310020790.9, entitled "POSITIONING METHOD, APPARATUS AND SYSTEM, ELECTRONIC DEVICE, AND STORAGE MEDIUM", filed on January 6, 2023, the entire disclosure of which is incorporated herein by reference.

### TECHNICAL FIELD

The present disclosure relates to the field of vehicle technology, and more specifically, to a positioning method, apparatus, system, electronic device, and storage medium.

### BACKGROUND

In daily vehicle usage, it is often necessary to determine its driver's position. For example, before entering the vehicle, the driver may unlock the doors when positioned within a certain proximity to the vehicle, and similarly, after exiting the vehicle, the driver may lock the doors within a certain distance range.

Currently, vehicle door operations are typically controlled remotely by drivers using remote key fobs. For example, when a driver is within proximity of the vehicle, a door unlocking operation may be triggered by activating the remote key fob within its operational range.

However, positioning solutions in the related art are limited to distance-specific localization. In practical applications, there is a growing demand for higher precision in positioning, such as determining whether a passenger is inside or outside the vehicle, which the existing methodologies cannot fulfill.

### SUMMARY

Embodiments of the present disclosure at least provide a positioning method, an apparatus, an electronic device and a storage medium to achieve more accurate positioning.

In a first aspect, the embodiments of the present disclosure provide a positioning method applicable to a primary Bluetooth device on a vehicle, the primary Bluetooth device being communicatively connected to a plurality of secondary Bluetooth devices provided at different locations on a body of the vehicle, where the method includes:
transmitting, in response to a Bluetooth connection operation between a user terminal and the primary Bluetooth device, data transmission information corresponding to the Bluetooth connection operation to the plurality of secondary Bluetooth devices, each of the secondary Bluetooth devices being configured to sniff Bluetooth communication between the user terminal and the primary Bluetooth device according to the data transmission information;
receiving respective sniffed data returned by the plurality of secondary Bluetooth devices; and
determining information on position of the user terminal relative to the vehicle based on the respective sniffed data returned by the plurality of secondary Bluetooth devices.

Optionally, transmitting the data transmission information corresponding to the Bluetooth connection operation to the plurality of secondary Bluetooth devices includes:
generating the data transmission information based on Bluetooth communication data for the Bluetooth connection operation, in response to the Bluetooth connection operation between the user terminal and the primary Bluetooth device; and
transmitting the generated data transmission information to each of the secondary Bluetooth devices.

Optionally, the data transmission information includes at least a data transmission time, a data transmission channel, and a Bluetooth access code for the Bluetooth communication between the user terminal and the primary Bluetooth device.

Optionally, the sniffed data returned by each of the secondary Bluetooth device includes one or more of:
a detected signal strength;
a detected signal angle; and
a distance determined by calculation based on a detected signal.

Optionally, when the sniffed data includes detected signal strength and/or signal angle, determining the information on position of the user terminal relative to the vehicle includes:
for each secondary Bluetooth device of the plurality of secondary Bluetooth devices, determining a distance between said each secondary Bluetooth device and the user terminal based on the signal strength and/or signal angle returned by said each secondary Bluetooth device; and
determining the information on position of the user terminal relative to the vehicle based on respective distances determined by the plurality of secondary Bluetooth devices.

Optionally, determining the information on position of the user terminal relative to the vehicle based on the respective distances determined by the plurality of secondary Bluetooth devices includes:
obtaining respective locations of the plurality of secondary Bluetooth devices on the vehicle; and
determining the information on position of the user terminal relative to the vehicle based on the respective distances determined by the plurality of secondary Bluetooth devices and the respective locations of the plurality of secondary Bluetooth devices on the vehicle.

Optionally, when a plurality of user terminals are present, said in response to the Bluetooth connection operation between the user terminal and the primary Bluetooth device includes:
in response to a Bluetooth connection operation of a corresponding one of the user terminals, at any of different Bluetooth connection time slots respectively allocated to the plurality of user terminals.

Optionally, after determining the information on position of the user terminal relative to the vehicle, the method further includes:
determining a position of a target user carrying the user terminal based on the information on position;
controlling the vehicle based on the position of the target user and a preset role type of the target user.

In a second aspect, the present disclosure further provides a positioning method applicable to a secondary Bluetooth device on a vehicle, the secondary Bluetooth device being communicatively connected to a primary Bluetooth device provided on a body of the vehicle, where the method includes:
sniffing, in response to a Bluetooth connection operation between a user terminal and the primary Bluetooth device, Bluetooth communication between the user terminal and the primary Bluetooth device according to data transmission information corresponding to the Bluetooth connection operation between the user terminal and the primary Bluetooth device received from the primary Bluetooth device; and
returning sniffed data to the primary Bluetooth device, such that the primary Bluetooth device determines information on position of the user terminal relative to the vehicle based on the returned sniffed data.

In a third aspect, the present disclosure further provides a positioning apparatus applicable to a primary Bluetooth device on a vehicle, the primary Bluetooth device being communicatively connected to a plurality of secondary Bluetooth devices provided at different locations on a body of the vehicle, wherein the positioning apparatus includes:
a transmission module configured to transmit, in response to a Bluetooth connection operation between a user terminal and the primary Bluetooth device, data transmission information corresponding to the Bluetooth connection operation to the plurality of secondary Bluetooth devices, each of the secondary Bluetooth device being configured to sniff Bluetooth communication between the user terminal and the primary Bluetooth device according to the data transmission information;
a reception module configured to receive respective sniffed data returned by the plurality of secondary Bluetooth devices;
a positioning module configured to determine the information on position of the user terminal relative to the vehicle based on the respective sniffed data returned by the plurality of secondary Bluetooth devices.

In a fourth aspect, the present disclosure further provides a positioning apparatus applicable to a secondary Bluetooth device on a vehicle, the secondary Bluetooth device being communicatively connected to a primary Bluetooth device provided on a body of the vehicle, where the positioning apparatus includes:
a sniffing module configured to sniff, in response to a Bluetooth connection operation between a user terminal and the primary Bluetooth device, Bluetooth communication between the user terminal and the primary Bluetooth device according to data transmission information corresponding to the Bluetooth connection operation received from the primary Bluetooth device; and
a return module configured to return sniffed data to the primary Bluetooth device, such that the primary Bluetooth device determines information on position of the user terminal relative to the vehicle based on the returned sniffed data.

In a fifth aspect, the present disclosure further provides a positioning system, including a primary Bluetooth device and a plurality of secondary Bluetooth devices both provided on a vehicle, the primary Bluetooth device being communicatively connected to the plurality of secondary Bluetooth devices, where
the primary Bluetooth device is configured to: transmit, in response to a Bluetooth connection operation of a user terminal, data transmission information corresponding to the Bluetooth connection operation to the plurality of secondary Bluetooth devices; receive respective sniffed data returned by the plurality of secondary Bluetooth devices; and determine information on position of the user terminal relative to the vehicle based on the respective sniffed data returned by the plurality of secondary Bluetooth devices, and
each of the secondary Bluetooth devices is configured to sniff Bluetooth communication between the user terminal and the primary Bluetooth device according to the data transmission information.

In a sixth aspect, the present disclosure further provides an electronic device, including a processor, a memory and a bus, the memory having stored therein machine-readable instructions executable by the processor, and the processor communicating with the memory via the bus when the electronic device is in operation, where the machine-readable instructions, when executed by the processor, cause the positioning method according to any one of the first aspect and its various embodiments, and the second aspect to be implemented.

In a seventh aspect, the present disclosure further provides a computer-readable storage medium having a computer program stored thereon, where the computer program, when executed by the processor, causes the positioning method according to any one of the first aspect and its various embodiments, and the second aspect to be implemented.

According to the aforesaid positioning method, apparatus, system, electronic device and storage medium, in response to a Bluetooth connection operation between a user terminal and a primary Bluetooth device, data transmission information corresponding to the Bluetooth connection operation can be transmitted to a plurality of secondary Bluetooth devices each configured to sniff Bluetooth communication between the user terminal and the primary Bluetooth device according to the data transmission information, and then respective sniffed data returned by the plurality of secondary Bluetooth devices can be received, and information on position of the user terminal relative to the vehicle can be determined based on the respective sniffed data returned by the plurality of secondary Bluetooth devices. The present disclosure achieves collaborative positioning by utilizing the primary Bluetooth device and multiple secondary Bluetooth devices provided on the vehicle. Since the multiple secondary Bluetooth devices are distributed at different locations on the vehicle body, the respective data that can be sniffed by the secondary Bluetooth devices at different locations is also different, thereby enabling multi-azimuth positioning, achieving higher positioning accuracy.

Other advantages of the present disclosure will be explained in more detail with the following description and drawings.

It should be understood that the above description is a summary of the technical solutions of the present disclosure only for the purpose of facilitating a better understanding of the technical means of the present disclosure so that the disclosure can be implemented according to the description in the specification. Specific embodiments of the present disclosure are given below to render the above and other objects, features and advantages of the present disclosure more clear.

### BRIEF DESCRIPTION OF THE DRAWINGS

For clearer descriptions of the technical solutions in the embodiments of the present disclosure, the following briefly introduces the accompanying drawings required for describing the embodiments. The drawings herein are incorporated in and constitute a part of the specification, and show the embodiments consistent with the present disclosure and are used in conjunction with the specification to explain the technical solutions of the present disclosure. It shall be understood that the accompanying drawings below show merely some embodiments of the present disclosure and thereby cannot be deemed as a restriction to the scope, and a person of ordinary skill in the art may still derive other accompanying drawings from these accompanying drawings without creative efforts. Further, a same reference sign is adopted to indicate a same component throughout the accompanying drawings. In the accompanying drawings:
FIG. 1 shows a schematic architectural diagram of a positioning system according to an embodiment of the present disclosure;
FIG. 2 shows a flowchart of a positioning method according to an embodiment of the present disclosure;
FIG. 3 shows a schematic diagram of timeslot based communication in a positioning method according to an embodiment of the present disclosure;
FIG. 4(a) shows an architectural diagram of a smart key solution according to an embodiment of the present disclosure;
FIG. 4(b) shows an architectural diagram of a smart key solution according to an embodiment of the present disclosure;
FIG. 5 shows a sniffing timing diagram of a smart key solution according to an embodiment of the present disclosure;
FIG. 6 shows a schematic diagram of a positioning apparatus according to an embodiment of the present disclosure;
FIG. 7 shows a schematic diagram of another positioning apparatus according to an embodiment of the present disclosure;
FIG. 8 shows a schematic diagram of an electronic device according to an embodiment of the present disclosure.

### DETAILED DESCRIPTION

Exemplary embodiments of the present disclosure will be described below in more detail with reference to the accompanying drawings. Although the accompanying drawings illustrate exemplary embodiments of the present disclosure, it should be understood that the present disclosure can be implemented in various forms and should not be construed as limited to embodiments described herein. Rather, these embodiments are provided so that the present disclosure will be understood thoroughly, and will fully convey the scope of the present disclosure to those skilled in the art.

In description of embodiments of the present disclosure, it should be understood that terms such as "include" or "have" are intended to indicate the existence of the characteristics, digits, steps, actions, components, parts disclosed by the specification or any combination thereof, without excluding the existence of one or more other characteristics, digits, steps, actions, components, parts or any combination thereof.

Unless otherwise specified, "/" refers to "or"; for example, A/B may indicate A or B. In this specification, the term "and/or" merely describes the association relationship between the associated objects and indicates that there may be three relationships. For example, A and/or B may indicate three cases where only A exists, both A and B exist, and only B exists.

The terms such as "first" and "second" are merely for a descriptive purpose, and cannot be understood as indicating or implying a relative importance, or implicitly indicating the number of the indicated technical features. Hence, the features defined by "first" and "second" can explicitly or implicitly include one or more features. In the description of embodiments of the present disclosure, "a plurality of" means two or more in number, unless otherwise specified.

It has been found through research that the positioning solutions in the related art are limited to distance-specific localization, and in practical applications, there is a growing demand for higher precision in positioning, such as determining whether a passenger is inside or outside the vehicle, which the existing methodologies cannot fulfill.

In order to at least partially solve one or more of the aforesaid problems and other potential problems, the present disclosure provides at least a positioning scheme for collaborative positioning based on multiple Bluetooth devices to improve the accuracy of positioning.

To facilitate the understanding of embodiments of the present disclosure, a positioning system disclosed in an embodiment of the present disclosure is first introduced in detail. The positioning system according to the embodiment of the present disclosure mainly includes a primary Bluetooth device and a plurality of secondary Bluetooth devices both provided on a vehicle, the primary Bluetooth device being communicatively connected to the plurality of secondary Bluetooth devices.

The primary Bluetooth device is configured to: transmit, in response to a Bluetooth connection operation of a user terminal, data transmission information corresponding to the Bluetooth connection operation to the plurality of secondary Bluetooth devices; receive respective sniffed data returned by the plurality of secondary Bluetooth devices; and determine information on position of the user terminal relative to the vehicle based on the respective sniffed data returned by the plurality of secondary Bluetooth devices.

Each of the secondary Bluetooth devices is configured to sniff Bluetooth communication between the user terminal and the primary Bluetooth device according to the data transmission information.

In order to facilitate further understanding of the positioning system according to the embodiment of the present disclosure, application scenarios for the system is briefly described below. The positioning system according to the embodiment of the present disclosure is mainly applicable to the field of target positioning in various vehicles. The target herein may be (but not limited to) a driver, a passenger, or any other object that needs to be positioned, such as a pet, a robot. The vehicle herein may be (but not limited to) a car, a large truck, or any other vehicle.

Solutions in the related art primarily focus on positioning driver-held remote key fobs, that is, enabling remote unlocking of vehicle doors by determining positions of the remote key fobs, from which it can be recognized that such solutions are limited to distance-specific localization. In practical applications, however, there is a growing demand for higher precision in positioning, such as determining whether a passenger is inside or outside the vehicle, for which other information in addition to the distance is also required. In view of this, embodiments of the present disclosure provide a solution for collaborative positioning using multiple Bluetooth devices, where a primary Bluetooth device is mainly configured for Bluetooth connection to and subsequent communication with a user terminal, and the secondary Bluetooth devices are mainly configured to sniff the Bluetooth communication in order for the primary Bluetooth device to achieve more accurate positioning based on the respective sniffed data of the secondary Bluetooth devices.

It should be noted that the primary Bluetooth device and the secondary Bluetooth devices herein may be the same device or separate devices, and in order to ensure Bluetooth communication, these separate devices may operate under the same Bluetooth protocol. The "primary" and "secondary" are designated only for functional distinction, with no specific restrictions imposed on their implementation.

In practical applications, in addition to the primary-secondary cooperative architecture, these Bluetooth devices may also operate in a peer-to-peer configuration. Under such a configuration, collaborative positioning can be performed based on the respective sniffed data returned by multiple Bluetooth devices deployed at different locations, thereby similarly improving the positioning accuracy.

However, in the peer-to-peer configuration, the multiple Bluetooth devices may be required to be connected to the user terminal concurrently. Considering that in practical applications one user terminal may not be capable of being connected to multiple Bluetooth devices concurrently, the primary-secondary cooperative architecture may be prioritized in embodiments of the present disclosure for the collaborative positioning, whereby the user terminal only needs to be connected to the primary Bluetooth device, thus achieving higher practicality.

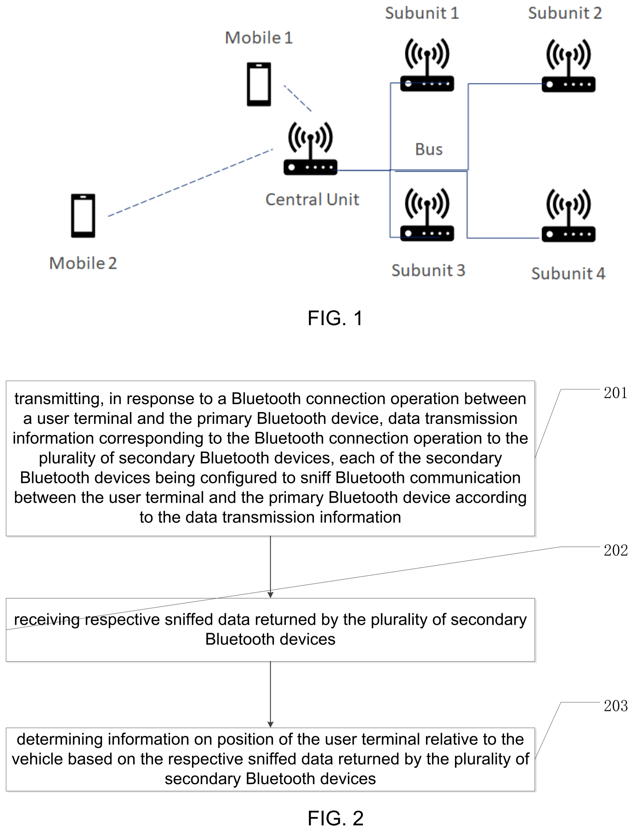

As shown in FIG. 1, it is a schematic diagram of a positioning system according to an embodiment of the present disclosure, where the system includes one central unit (corresponding to the primary Bluetooth device) and four subunits (corresponding to the secondary Bluetooth devices), and further includes two mobile phones (corresponding to the user terminals). The central unit herein can maintain Bluetooth connection to and communication with the two mobile phones, and the subunits communicatively connected to the central unit can perform subsequent sniffing, thereby providing better data support for subsequent precise positioning.

In practical applications, all units may be connected through a wired bus, and the four subunits may be placed at different locations on the vehicle, such as (but not limited to) in four vehicle doors or trunk doors. The locations of the subunits may be specifically determined based on different positioning needs. In addition, various information such as the number of subunits and device models may also be determined based on actual needs.

Considering the key role of the primary Bluetooth device in the entire positioning system, the implementation process of the method therefor will be described in detail below.

The positioning method according to embodiments of the present disclosure is typically executed by an electronic device with a certain computational capability. Examples of the electronic device include, but are not limited to, a terminal device or other processing device with Bluetooth communication and processing functions, where the terminal device may be a user equipment (UE), a vehicle-mounted device, or any other device with a Bluetooth communication capability. In some possible implementations, the positioning method may be implemented by a processor calling computer-readable instructions stored in a memory.

FIG. 2 shows a flowchart of a positioning method according to an embodiment of the present disclosure, where the method includes the following steps S201 to S203.

S201: in response to a Bluetooth connection operation between a user terminal and a primary Bluetooth device, data transmission information corresponding to the Bluetooth connection operation is transmitted to a plurality of secondary Bluetooth devices, each configured to sniff Bluetooth communication between the user terminal and the primary Bluetooth device according to the data transmission information.

S202: respective sniffed data returned by the plurality of secondary Bluetooth devices are received.

S203: information on position of the user terminal relative to the vehicle is determined based on the respective sniffed data returned by the plurality of secondary Bluetooth devices.

The user terminal herein may primarily refer to a terminal used by a driver, but may also extend to a passenger. In practical applications, it is assumed that both the driver and the passenger possess mobile phones, each of which can initiate a Bluetooth connection. For example, when the driver or passenger is near or inside the vehicle, his mobile phone can establish a Bluetooth connection with the primary Bluetooth device.

To enable collaborative positioning using multiple secondary Bluetooth devices, the data transmission information corresponding to the Bluetooth connection operation may be determined first. The primary Bluetooth device may transmit a message to each secondary Bluetooth device via the bus prior to the Bluetooth communication. The secondary Bluetooth device may monitor (by sniffing) a key indicator such as the signal strength of the Bluetooth communication based on this message, and feed the key indicator back to the primary Bluetooth device, enabling the primary Bluetooth device to derive a more precise positioning result. The positioning result herein may primarily refer to information on position of the user terminal relative to the vehicle, for example, a more precise position such as the left front or right rear of the vehicle.

It should be noted that for multi-terminal scenarios, respective sniffed data returned by the secondary Bluetooth devices varies slightly depending on the Bluetooth connection operation of each terminal. For example, for a user 1 who is farther from the vehicle, the signal strength returned by one secondary Bluetooth device for his user terminal 1 may be weaker, thus the calculated relative distance to the vehicle is smaller. Similarly, for a user 2 who is closer to the vehicle, the signal strength returned by the same secondary Bluetooth device for his user terminal 2 may be stronger, thus the calculated relative distance to the vehicle is larger. That is, for different user terminals, the signal strengths detected (via sniffing) even by the same secondary Bluetooth device at a point are different, thus information on positions of different user terminals relative to the vehicle can be determined. In addition, for the same user terminal, in principle, the signal strengths detected (via sniffing) by different secondary Bluetooth devices are also different, thus information on position of the user terminal relative to the vehicle can be determined.

After the user terminal and the primary Bluetooth device are successfully connected (the connection operation is initiated either by the user terminal or by the primary Bluetooth device), Bluetooth data packets need to be transmitted periodically between the user terminal and the primary Bluetooth device. Before each Bluetooth transmission, the primary Bluetooth device transmits a message to each subunit via the bus. The message includes the following data transmission information: timing for the next Bluetooth transmission between the primary Bluetooth device and the user terminal (corresponding to the data transmission time), electromagnetic frequency (Radio Frequency, RF) channel for transmission (corresponding to the data transmission channel), Bluetooth access code (unique to the communication between each user terminal and the primary Bluetooth device), and may also include various other information to optimize subsequent signal sniffing.

In the positioning method according to embodiments of the present disclosure, the relevant data transmission information may be generated from the Bluetooth communication data during the Bluetooth connection operation. The Bluetooth communication data is used to configure the Bluetooth communication between the user terminal and the primary Bluetooth device, specifically in the form of a transmitted Bluetooth data packet. The packet may include predefined transmission protocols and specific data payloads, the details of which are not further elaborated herein.

Upon receiving the message, the secondary Bluetooth device may sniff the transmission between the user terminal and the primary Bluetooth device, and may return the sniffed data obtained by sniffing to the primary Bluetooth device, enabling the primary Bluetooth device to determine the relative position of the user terminal.

The sniffed data herein may include the detected signal strength (Received Signal Strength Indicator, RSSI), the detected signal angle, or the distance determined by calculation based on the detected signal. The sniffed data determinable by secondary Bluetooth devices varies depending on their models or capabilities. For example, as technology evolves, a device may progress from solely detecting a signal strength to directly determining the distance to the user terminal based on the signal strength. As another example, when the secondary Bluetooth device includes multiple antennas, the angle of detected signal may also be determined, thereby determining the distance to the user terminal.

Considering that for the same data transmission, the signal strengths that can be sensed by secondary Bluetooth devices installed at different locations vary. Here, an example where four secondary Bluetooth devices are provided in the four doors of a vehicle. If a user carries his own mobile phone and stands at the left front of the vehicle, the secondary Bluetooth device provided in the left driver door of the vehicle would detect a stronger signal strength, and the secondary Bluetooth device provided in the right rear passenger door of the vehicle would detect a weaker signal strength. In this case, the primary Bluetooth device can synchronously determine the distances of multiple secondary Bluetooth devices from the user terminal, enabling more accurate positioning through cross-referenced positioning. Moreover, in the process of positioning, based on the specific locations of the secondary Bluetooth device, the determined information on relative position is more accurate. The position here may be close to the front door, or in the passenger seat, or in the driver's seat, etc.

The secondary Bluetooth device here may directly return the signal strength to the primary Bluetooth device in order for the primary Bluetooth device to determine the corresponding distance based on the signal strength. The secondary Bluetooth device may also directly return the signal angle for determination of the distance, and can also feed back the distance determined based on the signal strength or signal angle, enabling the primary Bluetooth device to determine the information on position of the user terminal relative to the vehicle based on the distances determined by multiple secondary Bluetooth devices.

During actual positioning operations, the locations of multiple secondary Bluetooth devices on the vehicle may be referenced to determine the position. The accuracy of the determined position directly correlates with the precision of these locations on the vehicle.

After determining the relative position in the positioning method according to embodiments of the present disclosure, the position of the target user carrying the user terminal may be determined based on the information on position, and then the vehicle may be controlled based on the position of the target user and the preset role type of the target user.

The role type herein may be a driver role or a passenger role, and for different role types, even if the same position is determined, role-specific vehicle controls may be performed. For example, when the driver approaches the driver seat, the vehicle doors may be automatically unlocked; when the passenger is in a passenger seat, the audio may be automatically turned on, which are not further elaborated herein.

Embodiments of the present disclosure may support Bluetooth communication for multiple user terminals, and considering the non-overlapping nature of Bluetooth communication, in actual applications, different Bluetooth connection time slots may be allocated for multiple user terminals, and respective Bluetooth connection operations of different user terminals may be responded to in different Bluetooth connection time slots.

It should be noted that, in a Bluetooth connection time slot, the primary Bluetooth device may communicate with the corresponding user terminal, and the corresponding multiple secondary Bluetooth devices may also obtain the sniffed data for the user terminal, and then carry out targeted positioning.

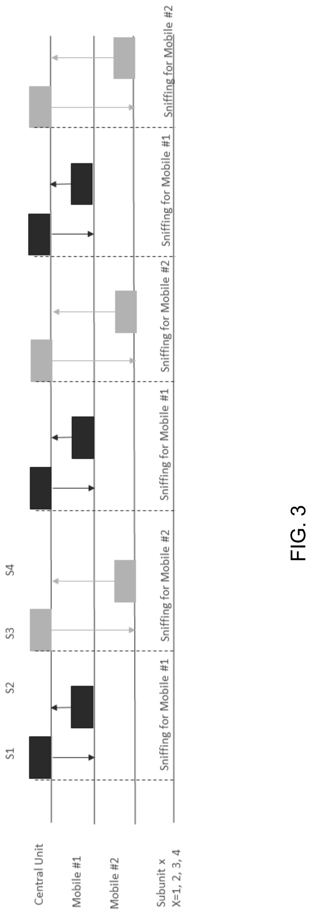

In order to facilitate further understanding of the timeslot based communication process for the multiple user terminals described above, the two mobile phones as shown in FIG. 1 are taken as the example of user terminals for specific description. FIG. 3 shows a schematic diagram of a specific timeslot based communication.

As shown in FIG. 3, during the Bluetooth connection time slots (S1~S2) between the central unit and the mobile phone #1, data packets are periodically exchanged on the corresponding first RF channel, and each subunit may sniff the transmission between the central unit and the mobile phone and calculate the RSSI value for the corresponding transmission. Due to the non-overlapping nature of Bluetooth transmissions, during the Bluetooth connection time slots (S3~S4) between the central unit and the mobile phone #2, data packets are periodically exchanged on the corresponding second RF channel, and each subunit may perform sniffing across different connections at different times, thereby addressing the requirement for positioning of multiple user terminals, for example, positions of both the driver and the passenger can be determined synchronously.

Based on the above positioning method and system, embodiments of the present disclosure further provides a smart key solution. The following elaborates on this solution in conjunction with at least one user terminal, a multi-connection central unit (Central Unit), and the four sniffing subunits (Sniffer-1~4).

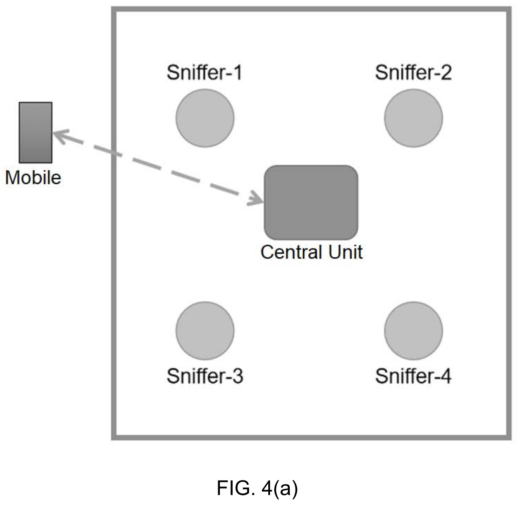

As shown in FIG. 4(a), the user terminal may be implemented as a smart key, designed as a mobile phone (Mobile) carried by the user, which may move freely and establish a connection with the Central Unit. The Central Unit employs Bluetooth multi-connection software, operating as a Bluetooth slave, and is fixed within the vehicle and designed to maintain simultaneous connections with up to 4 Sniffers.

Each Sniffer may be a Bluetooth-enabled sniffing unit, fixed within the vehicle. In this example, 4 Sniffers are installed. Their functions are to sniff the data packets exchanged between the Mobile and the Central Unit, and report the signal strength RSSI values for the packets (transmitted by the Mobile) to the vehicle system for decision-making based on this information.

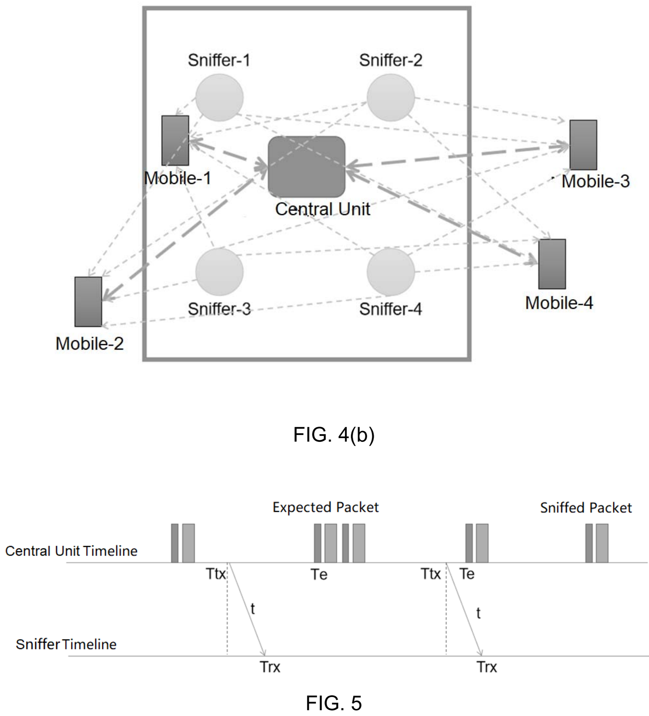

The above is only a relatively simple usage scenario, and the actual usage scenarios may be more complex. As shown in FIG. 4(b), 4 simultaneous connections to the Central Unit are established for 4 Mobiles (i.e., Mobile-1~4) and maintained. The 4 Sniffers need to concurrently sniff respective packets from the 4 Mobiles.

Here, after a connection with any Mobile is established, the Central Unit issues a sniffing instruction at any time. It carries the relevant information for the target connection, which the Sniffer needs to cache and initiate sniffing:

```
 {
 Ttx (Transmission Timestamp)
 Connection Index
 {
 Te (Expected Packet Timestamp)
 CI (Connection interval)
 Access Address (fixed post-connection)
 Expect Channel
 Channel Map
 Hop Increment
 PHY (PHY Mode)
 CSA (Channel Selection Algorithm)
 CRC Init (CRC Initialization Value)
 }
 }
```

For the sniffing initiation timing, FIG. 5 shows two possible situations:
The Central Unit sends an instruction at Ttx, specifying the anchor time Te for the next expected Connection Event; the Sniffer receives the instruction at Trx, and may calculate the time t taken for instruction propagation via the bus according to the received instruction length (where the bus transmission rate is determined by the bus used, such as CAN); if t<Te-Ttx, it means that the expected packet is not missed, and the sniffing may be initiated directly at the time point (Te-Ttx-t+Trx); if t>=Te-Ttx, the expected packet may be missed, and it is necessary to sniff the Mobile packet of the next Connection Event, that is, to initiate sniffing at the time point (Trx-t+Te-Ttx+Cl).

According to the Expect Channel and the Channel Map, the channel for the (N+1)th Connection Event after the expected packet can be calculated, and sniffing may be established on this channel.

Here, after sniffing the first packet, the Sniffer synchronizes to the anchor time of the Mobile transmission in each Connection Event, that is, enabling consistent sniffing of the first packet transmitted by the Mobile in all subsequent Connection Events.

When sniffing is enabled, the Central Unit needs to transmit updated connection parameters to all four Sniffers upon occurrences such as a Connection Request, a Connection Update, and a Channel Map Update between the Central Unit and the Mobile, and the Sniffers cache these parameters and establish new sniffing.

In scenarios where multiple interactions occur within one Connection Event, only the first or a selected RSSI value is validated as the effective RSSI.

When sniffing multiple links, temporal conflicts may arise if a user terminal transmits multiple packets within the same Connection Event. The Central Unit selectively receives and responds to packets according to its internal logic, while the Sniffers similarly prioritize specific packets for sniffing. Although slight desynchronization may occur between the Central Unit and Sniffers due to differing prioritization strategies, this does not impede the Sniffer's ability to sniff the first packet transmitted by the Mobile.

Once Sniffers are required by the Central Unit to initiate sniffing, they adhere strictly to the predefined Connection Interval for real-time sniffing and data reporting. This disciplined approach enables high-precision positioning under effective sniffing conditions.

In the description of this specification, the description with reference to terms such as "some possible embodiment", "some embodiments", "examples", "specific examples", or "some examples", and the like indicates that the specific feature, structure, material or characteristic described in conjunction with the embodiment or example is included in at least one embodiment or example of the present invention. In this specification, the schematic representations of the aforesaid terms do not necessarily for the same embodiment or example. Moreover, the specific features, structures, materials or characteristics as described may be combined in any one or more embodiments or examples in a suitable manner. In addition, those skilled in the art may combine and group the different embodiments or examples and the features of the different embodiments or examples described in this specification without contradicting each other.

With respect to the flowchart of the method according to embodiments of the present disclosure, certain operations are depicted as different steps performed in a certain sequence, and such a flowchart is illustrative rather than restrictive. Some of the steps described herein may be grouped together and performed in a single operation, some steps may be split into a plurality of sub-steps, and some steps may be performed in an order different from that shown herein. All the steps shown in the flowchart may be implemented in any manner by any circuit structure and/or tangible mechanism (e.g., by software running on a computer device, hardware such as logic functions implemented by a processor, chip and the like, and/or any combination thereof).

It will be understood by those skilled in the art that, in the method according to an embodiment, the sequence of the steps as presented does not imply a strict executing sequence and thereby does not constitute a restriction to the implementing process, and the specific executing sequence of the steps shall be determined by their function and possible internal logic.

Based on the same inventive concept, embodiments of the present disclosure further provides a positioning apparatus corresponding to the positioning method. Since the principle of the apparatus for solving the problem in embodiments of the present disclosure is similar to that of the positioning method in embodiments of the present disclosure, for the implementation of the apparatus, reference may be made to the implementation of the method, which will not be repeated here.

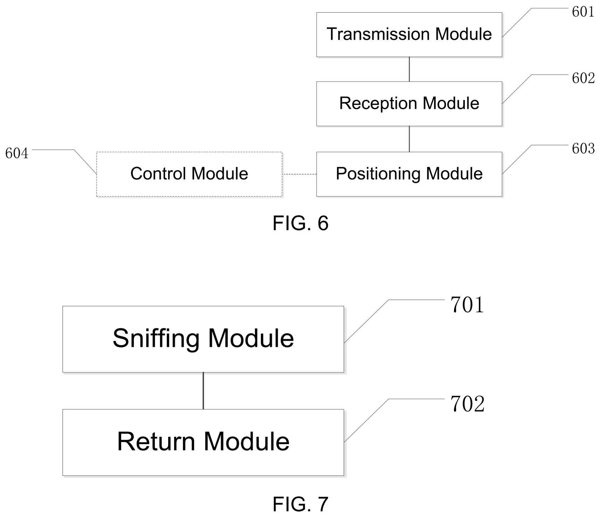

FIG. 6 shows a schematic diagram of a positioning apparatus according to an embodiment of the present disclosure. The positioning apparatus is applicable to a primary Bluetooth device on a vehicle that is communicatively connected to a plurality of secondary Bluetooth devices provided at different locations on a body of the vehicle, and includes:
a transmission module 601 configured to transmit, in response to a Bluetooth connection operation between a user terminal and the primary Bluetooth device, data transmission information corresponding to the Bluetooth connection operation to the plurality of secondary Bluetooth devices, each of the secondary Bluetooth device being configured to sniff Bluetooth communication between the user terminal and the primary Bluetooth device according to the data transmission information;
a reception module 602 configured to respective sniffed data returned by the plurality of secondary Bluetooth devices; and
a positioning module 603 configured to determine information on position of the user terminal relative to the vehicle based on the respective sniffed data returned by the plurality of secondary Bluetooth devices.

According to the aforesaid positioning apparatus, in response to a Bluetooth connection operation between a user terminal and a primary Bluetooth device, data transmission information corresponding to the Bluetooth connection operation can be transmitted to a plurality of secondary Bluetooth devices each configured to sniff Bluetooth communication between the user terminal and the primary Bluetooth device according to the data transmission information, and then respective sniffed data returned by the plurality of secondary Bluetooth devices can be received, and information on position of the user terminal relative to the vehicle can be determined based on the respective sniffed data returned by the plurality of secondary Bluetooth devices. The present disclosure achieves collaborative positioning by utilizing the primary Bluetooth device and multiple secondary Bluetooth devices provided on the vehicle. Since the multiple secondary Bluetooth devices are distributed at different locations on the vehicle body, the respective data that can be sniffed by the secondary Bluetooth devices at different locations is also different, thereby enabling multi-azimuth positioning, achieving higher positioning accuracy.

Optionally, the transmission module 601 is configured to transmit the data transmission information corresponding to the Bluetooth connection operation to the plurality of secondary Bluetooth devices by:
generating the data transmission information based on Bluetooth communication data for the Bluetooth connection operation, in response to the Bluetooth connection operation between the user terminal and the primary Bluetooth device; and
transmitting the generated data transmission information to each of the secondary Bluetooth devices.

Optionally, the data transmission information includes at least a data transmission time, a data transmission channel, and a Bluetooth access code for the Bluetooth communication between the user terminal and the primary Bluetooth device.

Optionally, the sniffed data returned by each of the secondary Bluetooth device includes one or more of:
a detected signal strength;
a detected signal angle; and
a distance determined by calculation based on a detected signal.

Optionally, in the case where the sniffed data includes the detected signal strength, the positioning module 603 is configured to determine the information on position of the user terminal relative to the vehicle by:
for each secondary Bluetooth device of the plurality of secondary Bluetooth devices, determining a distance between said each secondary Bluetooth device and the user terminal based on the signal strength and/or signal angle returned by said each secondary Bluetooth device; and
determining the information on position of the user terminal relative to the vehicle based on respective distances determined by the plurality of secondary Bluetooth devices.

Optionally, the positioning module 603 is configured to determine the information on position of the user terminal relative to the vehicle based on the respective distances determined by the plurality of secondary Bluetooth devices by:
obtaining respective locations of the plurality of secondary Bluetooth devices on the vehicle; and
determining the information on position of the user terminal relative to the vehicle based on the respective distances determined by the plurality of secondary Bluetooth devices and the respective locations of the plurality of secondary Bluetooth devices on the vehicle.

Optionally, in the case where a plurality of user terminals are present, the transmission module 601 is configured respond to the Bluetooth connection operation between the user terminal and the primary Bluetooth device by steps of:
allocating different Bluetooth connection time slots respectively to the plurality of user terminals; and
responding to a Bluetooth connection operation of a corresponding one of the user terminals, at any of the different Bluetooth connection time slots.

Optionally, the positioning apparatus further includes a control module 604 configured to determine a position of a target user carrying the user terminal based on the information on position after determining the information on position of the user terminal relative to the vehicle; and to control the vehicle based on the position of the target user and a preset role type of the target user.

FIG. 7 shows a schematic diagram of another positioning apparatus according to an embodiment of the present disclosure. The positioning apparatus is applicable to a secondary Bluetooth device on a vehicle that is communicatively connected to a primary Bluetooth device provided on a body of the vehicle, and includes:
a sniffing module 701 configured to sniff, in response to a Bluetooth connection operation between a user terminal and the primary Bluetooth device, Bluetooth communication between the user terminal and the primary Bluetooth device according to data transmission information corresponding to the Bluetooth connection operation between the user terminal and the primary Bluetooth device received from the primary Bluetooth device; and
a return module 702 configured to return sniffed data to the primary Bluetooth device, such that the primary Bluetooth device determines information on position of the user terminal relative to the vehicle based on the returned sniffed data.

It should be noted that the apparatus according to embodiments of the present disclosure may implement various processes of the method as described above and can achieve the same effect and function, which will not be repeated here.

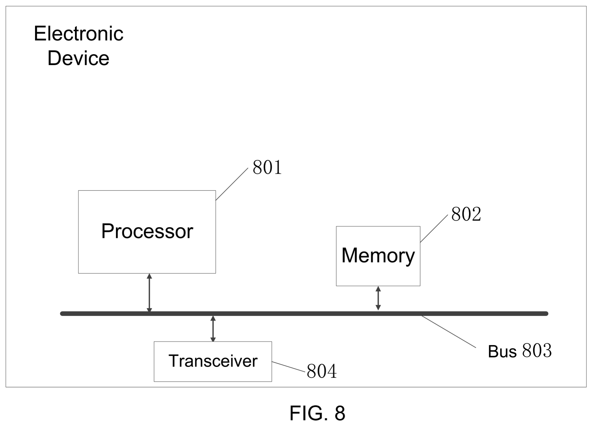

Embodiments of the present disclosure further provides an electronic device, as shown in FIG. 8 that is a schematic structural diagram of the electronic device according to embodiments of the present disclosure, which includes a processor 801, a memory 802, and a bus 803. The memory 802 has stored therein machine-readable instructions executable by the processor 801 (for example, executable instructions corresponding to the transmission module 601, the reception module 602, and the positioning module 603 in the apparatus shown in FIG. 6, or executable instructions corresponding to the sniffing module 701 and the return module 702 in the apparatus shown in FIG. 7). When the electronic device is in operation, the processor 801 communicates with the memory 802 via the bus 803, and the machine-readable instructions, when executed by the processor 801, cause the following processing to be performed:
transmitting, in response to a Bluetooth connection operation between a user terminal and the primary Bluetooth device, data transmission information corresponding to the Bluetooth connection operation to the plurality of secondary Bluetooth devices, each of the secondary Bluetooth devices being configured to sniff Bluetooth communication between the user terminal and the primary Bluetooth device according to the data transmission information; receiving respective sniffed data returned by the plurality of secondary Bluetooth devices; and determining information on position of the user terminal relative to the vehicle based on the respective sniffed data returned by the plurality of secondary Bluetooth devices; or
sniffing, in response to a Bluetooth connection operation between a user terminal and the primary Bluetooth device, Bluetooth communication between the user terminal and the primary Bluetooth device according to data transmission information corresponding to the Bluetooth connection operation between the user terminal and the primary Bluetooth device received from the primary Bluetooth device; and returning sniffed data to the primary Bluetooth device, such that the primary Bluetooth device determines information on position of the user terminal relative to the vehicle based on the returned sniffed data.

It should be noted that in the actual application, the electronic device may be further provided with a transceiver module 804, as shown in FIG. 8, configured to perform Bluetooth connection and device communication with one or more user terminals.

Embodiments of the present disclosure further provide a computer-readable storage medium having computer programs stored thereon. The computer programs, when executed by a processor, cause the wireless communication method according to the aforesaid method embodiments to be performed. The storage medium may be a volatile or non-volatile computer readable storage medium.

Embodiments of the present disclosure further provide a computer program product for carrying program code. The program code include instructions that can be adopted to execute the wireless communication method according to the aforesaid method embodiments. For the details, reference may be made to the aforesaid method embodiments, which will not be repeated herein.

The computer program product may be embodied specifically by means of hardware, software, or a combination thereof. In an optional embodiment, the computer program product is specifically embodied as a computer storage medium, and in another optional embodiment, the computer program product is specifically embodied as a software product, such as a software development kit (SDK), and the like.

The respective embodiments of the present disclosure are described in a progressive manner. The reference may be made to each other for the same or similar parts of the respective embodiments, and each embodiment focuses on the differences from other embodiments. Especially, for the embodiments of the apparatus, device and computer-readable storage medium, since they basically correspond to the embodiments of the method, they are described in a simple way, and reference may be made to the description part on embodiments of the method for relevant points.

The apparatus, device and computer-readable storage medium according to embodiments of the present disclosure correspond to the method one by one. Thus, the apparatus, device and computer-readable medium have similar beneficial technical effects with the corresponding method. Since the beneficial technical effects of the method have been described in detail above, the beneficial technical effects of the apparatus, device and computer-readable storage medium will not be repeated here.

One skilled in the art should understand that, the embodiments of the present disclosure may be provided as a method, apparatus (device or system) and computer-readable storage medium. Therefore, the present disclosure may be in the form of full hardware embodiments, full software embodiments, or a combination thereof. Moreover, the present disclosure may be in the form of a computer-readable storage medium that is implemented on one or more computer-usable storage media (including, without limitation, magnetic disk storage, CD-ROM and optical storage) containing computer-usable program codes.

The present disclosure is described referring to the flowchart and/or block diagram of the method, apparatus (device or system) and computer-readable storage medium according to the embodiments of the present disclosure. It should be understood that, each flow and/or block in the flowchart and/or block diagram and the combination of flow and/or block in the flowchart and/or block diagram may be realized via computer program instructions. Such computer program instructions may be provided to the processor of a general-purpose computer, special-purpose computer, a built-in processor or other programmable data processing devices to produce a machine, such that the instructions executed by the processor of a computer or other programmable data processing devices may produce a device for realizing the functions specified in one or more flows in the flowchart and/or one or more blocks in the block diagram.

Such computer program instructions may also be stored in a computer-readable storage that can guide a computer or other programmable data processing devices to work in a specific mode, such that the instructions stored in the computer-readable storage may produce a manufacture comprising a commander device, where the commander device may realize the functions specified in one or more flows of the flowchart and one or more blocks in the block diagram.

Such computer program instructions may also be loaded to a computer or other programmable data processing devices, such that a series of operational processes may be executed on the computer or other programmable devices to produce a computer-realized processing, and thereby the instructions executed on the computer or other programmable devices may provide a process for realizing the functions specified in one or more flows in the flowchart and/or one or more blocks in the block diagram.

In a typical configuration, the computing device includes one or more processors (CPU), an input/output interface, a network interface, and a memory.

The memory may include a non-permanent memory in a computer-readable medium, a random access memory (RAM) and/or a non-volatile memory, such as a read-only memory (ROM) or a flash memory (flash RAM). The memory is an example of a computer-readable medium.

The computer-readable medium may be permanent and non-permanent, or removable and non-removable media, which can achieve the information storage by any method or technology. The information may be computer-readable instructions, data structures, program modules, or other data. Examples of the computer storage medium include, but are not limited to, a phase change memory (PRAM), a static random access memory (SRAM), a dynamic random access memory (DRAM), other types of random access memory (RAM), read-only memory (ROM), an electrically erasable programmable read-only memory (EEPROM), a flash memory or other memory technologies, a CD-ROM, a digital versatile disc (DVD) or other optical storage, and a magnetic cassette tape. The magnetic tape storage or other magnetic storage devices or any other non-transmission medium may be used to store information that can be accessed by computing devices. Furthermore, although the operations of the method of the present disclosure are described in a specific order in drawings, it does not require or imply that the operations must be performed in the specific order, or that the desired result can only be achieved if all the operations as shown are performed. Additionally or alternatively, some steps may be omitted, multiple steps may be combined into one step for execution, and/or one step may be decomposed into multiple steps for execution.

Although the spirit and principles of the present disclosure have been described with reference to several embodiments, it shall be understood that the present disclosure is not limited to the embodiments as disclosed, nor does the division of the aspects imply that the features in those aspects cannot be combined for benefit, such division being for convenience of presentation only. The present disclosure is intended to cover various modifications and equivalent arrangements included within the scope of the appended claims.

## Claims

1. A positioning method applicable to a primary Bluetooth device on a vehicle, the primary Bluetooth device being communicatively connected to a plurality of secondary Bluetooth devices provided at different locations on a body of the vehicle, wherein the positioning method comprises:
transmitting, in response to a Bluetooth connection operation between a user terminal and the primary Bluetooth device, data transmission information corresponding to the Bluetooth connection operation to the plurality of secondary Bluetooth devices, each of the secondary Bluetooth devices being configured to sniff Bluetooth communication between the user terminal and the primary Bluetooth device according to the data transmission information;
receiving respective sniffed data returned by the plurality of secondary Bluetooth devices; and
determining information on position of the user terminal relative to the vehicle based on the respective sniffed data returned by the plurality of secondary Bluetooth devices.

2. The positioning method according to claim 1, wherein the transmitting data transmission information corresponding to the Bluetooth connection operation to the plurality of secondary Bluetooth devices comprises:
generating the data transmission information based on Bluetooth communication data for the Bluetooth connection operation, in response to the Bluetooth connection operation between the user terminal and the primary Bluetooth device; and
transmitting the generated data transmission information to each of the secondary Bluetooth devices.

3. The positioning method according to claim 1 or 2, wherein the data transmission information comprises at least a data transmission time, a data transmission channel, and a Bluetooth access code for the Bluetooth communication between the user terminal and the primary Bluetooth device.

4. The positioning method according to any one of claims 1 to 3, wherein the sniffed data returned by each of the secondary Bluetooth devices comprises one or more of:
a detected signal strength,
a detected signal angle, and
a distance determined by calculation based on a detected signal.

5. The positioning method according to any one of claims 1 to 4, wherein when the sniffed data comprises a detected signal strength and/or signal angle, the determining the information on position of the user terminal relative to the vehicle comprises:
for each secondary Bluetooth device of the plurality of secondary Bluetooth devices, determining a distance between said each secondary Bluetooth device and the user terminal based on the signal strength and/or signal angle returned by said each secondary Bluetooth device; and
determining the information on position of the user terminal relative to the vehicle based on respective distances determined by the plurality of secondary Bluetooth devices.

6. The positioning method according to claim 5, wherein the determining the information on position of the user terminal relative to the vehicle based on the respective distances determined by the plurality of secondary Bluetooth devices comprises:
obtaining respective locations of the plurality of secondary Bluetooth devices on the vehicle; and
determining the information on position of the user terminal relative to the vehicle based on the respective distances determined by the plurality of secondary Bluetooth devices and the respective locations of the plurality of secondary Bluetooth devices on the vehicle.

7. The positioning method according to any one of claims 1 to 6, wherein when a plurality of user terminals are present, said in response to the Bluetooth connection operation between the user terminal and the primary Bluetooth device comprises:
in response to a Bluetooth connection operation of a corresponding one of the user terminals, at any of different Bluetooth connection time slots respectively allocated to the plurality of user terminals.

8. The positioning method according to any one of claims 1 to 7, further comprising, after determining the information on position of the user terminal relative to the vehicle:
determining a position of a target user carrying the user terminal based on the information on position; and
controlling the vehicle based on the position of the target user and a preset role type of the target user.

9. A positioning method applicable to a secondary Bluetooth device on a vehicle, the secondary Bluetooth device being communicatively connected to a primary Bluetooth device provided on a body of the vehicle, wherein the positioning method comprises:
sniffing, in response to a Bluetooth connection operation between a user terminal and the primary Bluetooth device, Bluetooth communication between the user terminal and the primary Bluetooth device according to data transmission information corresponding to the Bluetooth connection operation received from the primary Bluetooth device; and
returning sniffed data to the primary Bluetooth device, such that the primary Bluetooth device determines information on position of the user terminal relative to the vehicle based on the returned sniffed data.

10. A positioning apparatus applicable to a primary Bluetooth device on a vehicle, the primary Bluetooth device being communicatively connected to a plurality of secondary Bluetooth devices provided at different locations on a body of the vehicle, wherein the positioning apparatus comprises:
a transmission module configured to transmit, in response to a Bluetooth connection operation between a user terminal and the primary Bluetooth device, data transmission information corresponding to the Bluetooth connection operation to the plurality of secondary Bluetooth devices, each of the secondary Bluetooth device being configured to sniff Bluetooth communication between the user terminal and the primary Bluetooth device according to the data transmission information;
a reception module configured to receive respective sniffed data returned by the plurality of secondary Bluetooth devices; and
a positioning module configured to determine information on position of the user terminal relative to the vehicle based on the respective sniffed data returned by the plurality of secondary Bluetooth devices.

11. A positioning apparatus applicable to a secondary Bluetooth device on a vehicle, the secondary Bluetooth device being communicatively connected to a primary Bluetooth device provided on a body of the vehicle, wherein the positioning apparatus comprises:
a sniffing module configured to sniff, in response to a Bluetooth connection operation between a user terminal and the primary Bluetooth device, Bluetooth communication between the user terminal and the primary Bluetooth device according to data transmission information corresponding to the Bluetooth connection operation received from the primary Bluetooth device; and
a return module configured to return sniffed data to the primary Bluetooth device, such that the primary Bluetooth device determines information on position of the user terminal relative to the vehicle based on the returned sniffed data.

12. A positioning system, comprising a primary Bluetooth device and a plurality of secondary Bluetooth devices both provided on a vehicle, the primary Bluetooth device being communicatively connected to the plurality of secondary Bluetooth devices,
wherein the primary Bluetooth device is configured to: transmit, in response to a Bluetooth connection operation of a user terminal, data transmission information corresponding to the Bluetooth connection operation to the plurality of secondary Bluetooth devices; receive respective sniffed data returned by the plurality of secondary Bluetooth devices; and determine information on position of the user terminal relative to the vehicle based on the respective sniffed data returned by the plurality of secondary Bluetooth devices, and
wherein each of the secondary Bluetooth devices is configured to sniff Bluetooth communication between the user terminal and the primary Bluetooth device according to the data transmission information.

13. An electronic device, comprising a processor, a memory, and a bus, the memory having stored therein machine-readable instructions executable by the processor, and the processor communicating with the memory via the bus when the electronic device is in operation, wherein the machine-readable instructions, when executed by the processor, cause the positioning method according to any one of claims 1 to 9 to be implemented.

14. A computer-readable storage medium having a computer program stored thereon, wherein the computer program, when executed by a processor, causes the positioning method according to any one of claims 1 to 9 to be implemented.
